# EUROPEAN PATENT APPLICATION

(11) **EP 1 043 822 A1**
(43) Date of publication of application: **11.10.2000**
(21) Application number: 00201265.6
(22) Date of filing: 07.04.2000
(51) Int. Cl.: H02G 3/04, E04B 5/48, E04F 19/04

(54) **Building with duct elements for guiding lines**

(30) Priority: 07.04.1999 NL 1011745; 06.04.2000 NL 1014855; 06.04.2000 NL 1014856
(71) Applicant: Polynorm Bouwprodukten B.V., 3751 LJ Bunschoten (NL)
(72) Inventor: Tuk, Adrianus Hugo Lamertus, 3784 WS Ter Schuur (NL); Heinen, Jan, 3752 AP Bunschoten (NL); Berg, van de Gerbrand, 3994 TL Houten (NL); Linthorst, Patrick Johannes, 3442 BP Woerden (NL); Hill van den, Harmen Jacobus, 1215 BG Hilversum (NL)
(74) Representative: Land, Addick Adrianus Gosling

(57) **Abstract**

The present invention relates to a building, comprising:
- a floor;
- a wall connecting onto the floor;
- one or more duct elements which can be fixed to each other, are placeable along the wall and the floor and in which lines can be received;
   wherein at least a part of each wall is narrowed.

## Description

It has been known for many years in public utilities construction to arrange cable ducts along the walls of a building. If spaces in a building are given a different lay-out, the wiring can then be adapted more easily.

Many types of cable duct systems are known in public utilities construction, wherein electrical cables, such as supply voltage cables, telephone lines, data communication lines etc., are arranged in a housing which is fixed to a wall and/or a floor of an office space. Such cable duct systems provide the option of arranging the required lines in office spaces in simple manner wherein a high degree of flexibility is available when for instance there is a change in cable requirements or the lay-out of the office spaces is changed.

These known cable duct systems are however too large in dimensions to find application in house-building and it has been found that occupiers consider such cable duct systems intended for public utilities construction unacceptable and unattractive. In the house-building sector channels are for instance cut in the walls along which electrical wiring can be carried, which is labour-intensive. There is moreover little flexibility since any change in the desired route of lines can result in the cutting of new channels and possible closing of already existing channels.

The object of the present invention is to provide a building, in particular a dwelling, in which duct elements are arranged, wherein the above stated drawbacks are obviated.

The invention provides for this purpose a building, comprising:
- a floor;
- a wall connecting onto the floor;
- one or more duct elements which can be fixed to each other, are placeable along the wall and the floor and in which lines can be received;
   wherein at least a part of each wall is narrowed, wherein the depth available in the duct element for accommodating lines is preferably greater than the depth of the duct element visible from the living area. The arranging of the duct elements in the narrowed portion suggests that a duct element has a smaller depth than the actual depths available for accommodating lines or socket outlets.

According to a further preferred embodiment of the invention the floor comprises a basic floor with a finishing floor arranged thereon, the duct element extends through the finishing floor and the duct element supports on the basic floor. The dimensions of the duct element visible from the living area are hereby smaller than the actual dimensions.

According to a preferred embodiment the height in a duct element available for accommodating the lines is greater than the visible height.

The invention also relates to a duct element, comprising:
- a duct housing divided into a first and second duct compartment for guiding lines of respectively a first and second type; and
- a closing element with which the duct housing can be closed, wherein for instance the lines of the first type comprise ECS lines for mains power supply, communication and/or security, and the lines of the second type comprise for instance liquid conduits, in particular central heating pipes. Dividing of the duct element into compartments can ensure that lines of different types influence each other less or even not at all. Influencing of communications lines by electromagnetic radiation from 220 V mains voltage lines is reduced by arranging the communications lines and the mains voltage lines in mutually separated compartments. In that case the compartments can be mutually separated by a wall of material, such as metal, which prevents interference.

In the mounted situation the first duct compartment is preferably arranged above the second duct compartment. When the second duct compartment is for instance provided with liquid conduits and there is leakage in such conduits, this will prevent the liquid entering the other duct compartment where power lines are for instance situated.

According to a preferred embodiment of the invention the duct element comprises a third duct compartment positioned between the first and second duct compartment. This duct compartment can be used for lines of a third type or functions as shunting area. This shunting area provides the space in the duct element for receiving connecting elements such as for instance socket outlets, antenna connections, switches and the like. This provides the option of arranging a connecting element in a duct element such that the connecting element no longer protrudes outside the duct element, or hardly so.

According to a further preferred embodiment of the invention the duct element comprises a substantially C-shaped duct profile. The C-shaped duct profile can be placed with its back against the wall, wherein the lines can be arranged in the space enclosed by the profile.

According to a further preferred embodiment of the invention the duct element comprises a substantially I-shaped duct profile. An I-shaped duct profile has the advantage that the profile is suitable to be provided with lines on both sides.

According to a further preferred embodiment of the invention the duct element is adapted to be also applied as structural support under a non-bearing wall. The non-bearing wall is in this case preferably arranged on the I-shaped duct element, wherein two duct-shaped spaces are created on both sides of the non-bearing wall at the place of connection to the floor. One of the ducts is preferably filled with insulation material to ensure a good sound insulation between the spaces separated by the duct element and the non-bearing wall, while the duct-shaped space is provided with duct compartments for guiding lines of different type.

According to another preferred embodiment of the invention the closing element is replaceable after fitting of the duct element. Depending on the, in many cases changing, requirements of an occupant, the appearance of the duct element as well as the positions of the connecting elements such as wall sockets and the like can hereby adapted as desired and in simple manner.

According to a further preferred embodiment of the invention a duct element comprises screening means for screening on the visual side the connecting edge of a floor covering to be arranged on the finishing floor, in particular carpet, parquet or tiles. Such screening means preferably comprise a flange arranged on the closing plate so that in the fitted situation the closing plate extends some distance from the duct housing. In another embodiment the screening means can comprise a projection provided in the duct housing for receiving thereunder the floor covering for arranging on the finishing floor. The floor covering can hereby connect onto the duct element in attractive manner.

According to a further preferred embodiment of the invention the duct housing is provided with a standing portion which in the fitted situation of the duct element covers the bottom edge of the wall. The bottom edge of the wall, which is often crumbly, is hereby covered.

According to further preferred embodiments of the invention the duct elements are prefabricated, wherein the lines are preferably also arranged in the duct element prior to mounting thereof. The building process is considerably shortened by supplying ready-to-use duct elements provided with lines.

In the house-building sector electrical leads are still arranged mainly in channels in the walls, although this is more time-consuming than laying a cable duct. Cable ducts are however perceived as unattractive in houses.

With the increasing wiring in a house, for instance for smoke alarms, alarm installations, telephone and cable connections and the like, in addition to the practice wherein partition walls in homes are often also moved during the lifespan of a building, channelling of cables is becoming increasingly uneconomic.

The European patent application EP-A-0 721 245 proposes to arrange a cable duct of plastic against the wall and, at positions where a socket outlet is desired, to drill a hole through the cable duct and into the wall. Such cable ducts of plastic, in which holes are moreover drilled in a defacing manner, have yet to gain acceptance in the Dutch home-building sector.

The present invention further provides an assembly for a cable duct for arranging along a wall of a building, comprising:
- a rear plate for arranging thereof against the wall, which rear plate is provided with one or more prearranged openings for arranging socket outlets partly in the wall in recessed position;
- a cover plate provided with complementary snap edges for snapping thereof over the snap edges of the rear plate; and
- a cover frame for arranging thereof over an arranged socket outlet.

The recesses in which the socket outlets can be arranged can also serve for accommodating therein of wire loops and/or plug connections. Wires can also be passed therethrough from the front to the rear of the rear plate (and vice versa).

The rear plate and the cover plate are preferably of metal in order to provide a robust and aesthetic cable duct.

The rear plate and/or the cover plate are preferably profiled such that a number of compartments are formed which are mutually separated by metal parts of the rear plate and/or cover plate. The rear plate can for instance have upper or lower edges curved more or less in an S-shape onto which protrusions of the rear plate can be snapped and which thus also form an additional compartment, for instance for data transmission cables.

The present invention further provides a method for arranging a cable duct along a wall, wherein a recess is arranged at a predetermined location in the wall, wherein a rear plate with an opening is arranged against the wall at the position of the recess, wherein a socket outlet is placed and connected in the recess and the opening, wherein a cover plate is made to length and snapped onto the rear plate and wherein a cover frame is arranged over the socket outlet and cover plate.

In addition, applicant markets for the house-building and public utilities industries steel door frames which, using clamping brackets, can engage on edges of an opening for a door frame.

The present invention further provides a frame, comprising:
- a first frame part which can be fixed to an opening in a wall using clamping brackets; and
- a second frame part removable relative to the first frame part, wherein space is available between the first and the second frame part for guiding electrical cables through the frame.

The second removable frame part can for instance be pushed easily onto the first frame part fixed with clamping brackets to the opening and then be screwed fixedly to the clamping jaws using socket screws through openings in the fixed frame part. Owing to the frame according to the present invention electrical cables can be guided from cable ducts along a door (or window) so that electrical wiring can later also be readily modified.

Close to a door frame a light source or smoke alarm can for instance be easily connected, or other electrical or electronic equipment such as motion detectors and the like. This can also take place later, i.e. after arranging of the frame, in that the second frame part is easily removable - re-placing of the frame can therefore be dispensed with.

In a further preferred embodiment the frame is provided with a recess for receiving a switch, for instance for operating lighting in the space.

In a further preferred embodiment of the frame according to the present invention a channel for data transmission cables is electrically shielded from power conducting cables.

In a further preferred embodiment standing and lying parts of the frame parts are electronically connected to each other, while one of the components is earthed. In the preferred embodiment wherein the frame is of metal, an individual must be prevented under all circumstances from receiving an electric shock through contact.

Further advantages, features and details of the invention will be elucidated in the following description of preferred embodiments thereof with reference to the figures, in which:
fig. 1 shows a view in perspective of a preferred embodiment of a building with a duct element arranged in the wall and the floor;
fig. 2 shows a partly cut-away view in perspective of a further preferred embodiment;
fig. 3 is a view of another preferred embodiment of a duct element arranged in a wall of a building;
fig. 4 shows a view in perspective of a further preferred embodiment of a duct element as support of an inner wall;
fig. 5 shows an alternative embodiment of a duct element as according to fig. 4;
fig. 6 is a view in perspective of a further preferred embodiment of a duct element under an inner wall;
fig. 7 shows another preferred embodiment of a duct element;
fig. 8 shows a partly broken-away view in perspective of a space provided with a preferred embodiment of an assembly and cable duct according to the present invention;
fig. 9 and 10 show views in perspective of detail IX of fig. 8 in respectively disassembled state and assembled state;
fig. 11 is a detailed view in perspective of a preferred embodiment of a cable duct according to the present invention;
fig. 12 shows a view in cross-section through a preferred embodiment of a cable duct according to the present invention;
fig. 13 shows a further view of a preferred embodiment of a cable duct according to the present invention;
fig. 14 shows yet another view in perspective of a cable duct according to the present invention;
fig. 15 shows a partly broken-away view in perspective of a door frame according to the present invention;
fig. 16 shows a disassembled view of a door frame as according to fig. 15; and
fig. 17 shows a view in cross-section through the door frame of fig. 15 and 16.

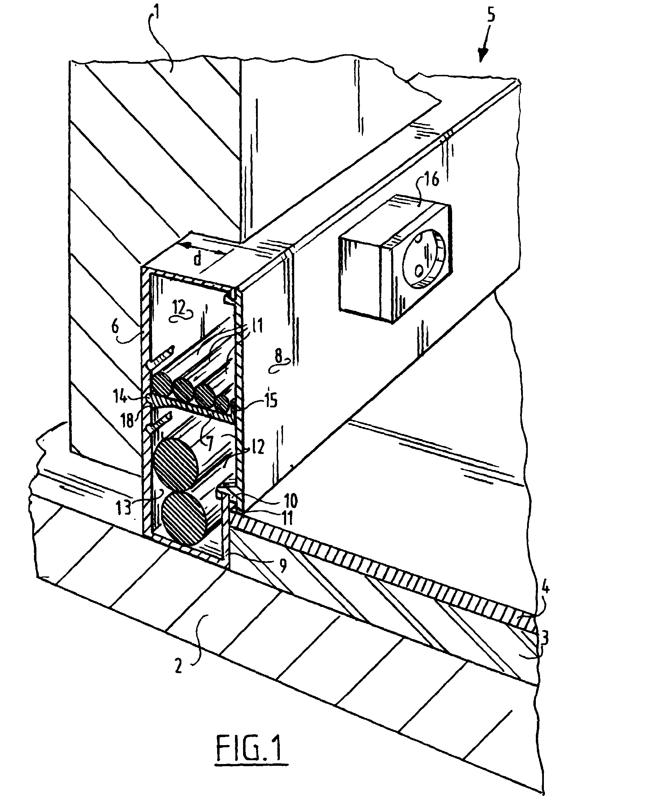

Fig. 1 shows a part of a living area of a building at the location of the connection of a bearing or non-bearing wall 1 to a concrete floor 2. The wall can for instance be a bearing party wall, i.e. a wall between two separate dwellings, a bearing or non-bearing inner cavity wall of an outside wall, i.e. the wall between the dwelling and the outside air, or a non-bearing inner wall, i.e. a wall between different spaces inside a dwelling. Wall 1 is provided with a narrowed portion, i.e. the wall is removed over a thickness d. The distance d depends inter alia on the minimum thickness of the wall required for structural reasons. In the case of the party walls of reinforced concrete which are much used in house building and which usually have a thickness of 250 mm, a concrete thickness of about 180 mm is necessary for structural reasons. The size difference amounts in this case to 70 mm, which difference is used to arrange two narrowed portions, each with thickness d of a maximum of 35 mm.

It is usual in house-building to arrange a cement floor/screed or finishing floor 3 on the concrete floor or basic floor, for instance a prefabricated system floor, during the completion stage of the building process. In practice such a finishing floor has a thickness of 30-50 mm. Before arranging of this finishing floor 3 a duct element 5 is arranged as according to figure 1 in a narrowed portion of wall 1.

Because duct elements 5 are arranged in a narrowed portion in wall 1 and in finishing floor 3, the dimensions of duct element 5 visible from the living area are smaller than the space available in duct element 5.

In a particular embodiment, at an available height of 185 mm and an available thickness of 35-45 mm the height and thickness visible from the living area are respectively 135 mm and 10-15 mm. In another embodiment at an available height of 135 mm and an available thickness of 35-45 mm the height and thickness visible from the living area are respectively 105 mm and 10-15 mm. Such dimensions suggest that a skirting which is usual in house building and which is deemed acceptable by the occupant on aesthetic grounds has been arranged against the wall.

Duct element 5 comprises a C-profile 6 which is manufactured from steel or from plastic. Fixed to the underside of C-profile 6 is a standing wall 9 which prevents concrete flowing into duct element 5 during casting of this concrete for the finishing floor 3. The C-profile 6 with standing edge 9 can be closed with closing plate 8. This closing plate 8 can be snapped fixedly onto duct element 5 and removed therefrom.

Duct element 5 is sub-divided in this embodiment into a first duct compartment 12 and a second duct compartment 13 by means of a compartment wall 7. The duct compartment wall 7 is provided with a lip 14 and a support surface 18 wherein lip 14 can be arranged in a corresponding recess in the C-profile and support surface 18 ensures that compartment wall 7 extends substantially at a right angle to the upright part of the C-profile.

Lines L₁ can be arranged in the upper compartment and lines L₂ in the lower compartment. In order to simplify arranging of lines L₁ in the upper compartment, the compartment wall 7 is provided on its end lying opposite lip 14 with a standing edge 15 which prevents lines L₁ falling from compartment wall 7 when the closing plate 8 is open.

The lines L₁ in the upper compartment are for instance lines for supply voltage, communication, security etc., while lines L₂ in lower compartment 13 are for instance central heating pipes. In view of the relatively large diameter of heating pipes, these are placed one above another to achieve the most efficient possible utilization of the space available in a duct compartment 13 and the smallest possible visible thickness of duct element 5.

On closing plate 8 can be mounted socket outlets 16 which connect to lines L₁ in upper compartment 12 by means of an opening in closing plate 8. Such socket outlets 16 can be placed at random locations in the longitudinal direction of a duct element 5, thereby enabling a great flexibility in the lay-out of the (living) space.

Closing plate 8 is interchangeable with another closing plate which differs for instance in shape, colour, finish, material and the like. Occupants can hereby modify the appearance of their duct system as desired to their taste or requirements as they change through time.

Floor covering 4 is generally arranged on the finishing floor 3, for instance in the form of carpet, parquet, tiles and the like. In order to embellish the connection of such a floor covering 4 to the duct element 5, the closing plate 8 is provided in a preferred embodiment with a flange 11 formed in the line of closing plate 8 and a flange 10 extending substantially perpendicularly thereto, which flanges 10 and 11 are dimensioned such that they obstruct the view of the edge at the position of the connection of the floor covering to the standing edge 9.

Alternatively, a recess can be provided in the housing of the duct element which fulfils the same function as the above mentioned flanges 10 and 11.

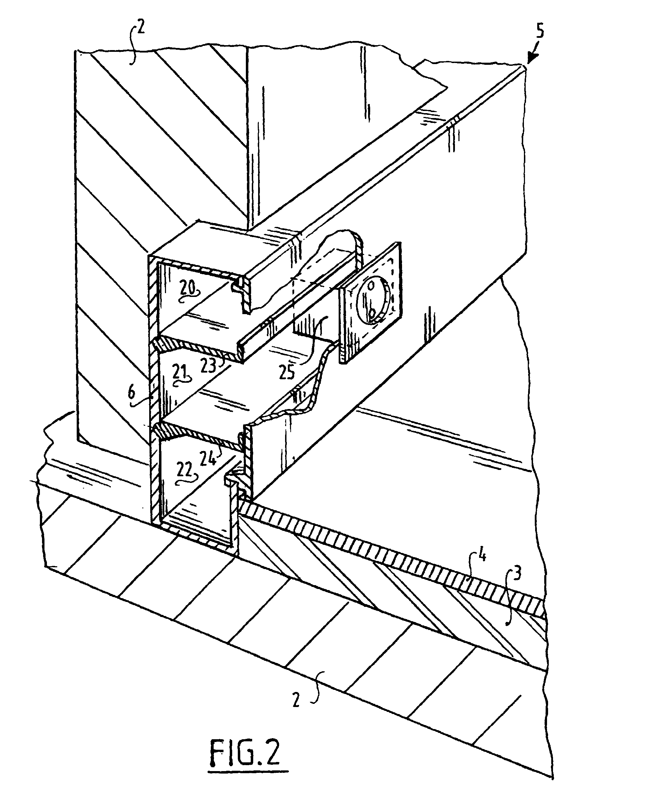

Figure 2 shows an alternative embodiment of the duct element 5, wherein in similar manner as described above an upper compartment wall 23 and a lower compartment wall 24 are arranged on C-profile 6, whereby duct element 5 is sub-divided into an upper compartment 20, a middle compartment 21 and a lower compartment 22. In the lower compartment 22 are arranged lines such as for instance water pipes or central heating pipes, while electric wiring such as supply voltage lines, communication lines and the like are placed in upper compartment 20. The middle compartment 21 functions here as shunting area, i.e. this space is suitable for receiving connecting elements 25 such as socket outlets, transformers, sensors, motion detection alarms, infrared transmitters/receivers etc., as well as for guiding lines between upper compartment 20 and these connecting elements 25. Because in this embodiment the connecting elements 25 can be arranged in shunting area 21, the total thickness of the duct system visible from the living area decreases.

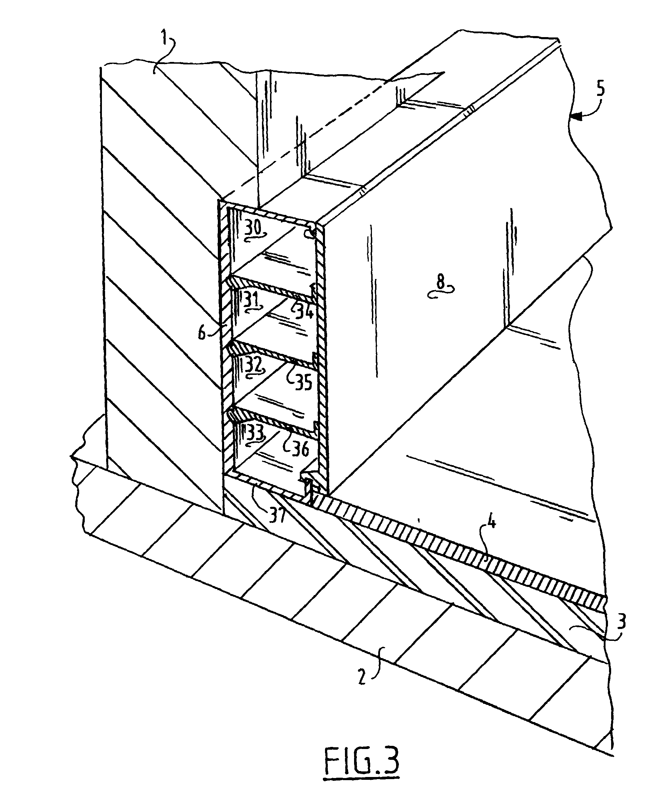

In figure 3 is shown another preferred embodiment in which a duct element 5 is arranged in a narrowed portion of a wall 1. This only takes place however after the finishing floor 3 has already been arranged on floor 2. In this embodiment the duct element 5 is therefore not arranged in finishing floor 3. Duct element 5 is sub-divided in this embodiment into four compartments 30, 31, 32 and 33 by means of three compartment walls 34, 35 and 36. Although in this embodiment the visible height is greater than in the foregoing embodiments, the accessibility of particularly the lower compartment 33 is improved.

In the embodiment of figure 3 the duct housing is provided with a standing part 38 which in the mounted situation of the duct element covers the bottom edge of wall 1 for screening thereof.

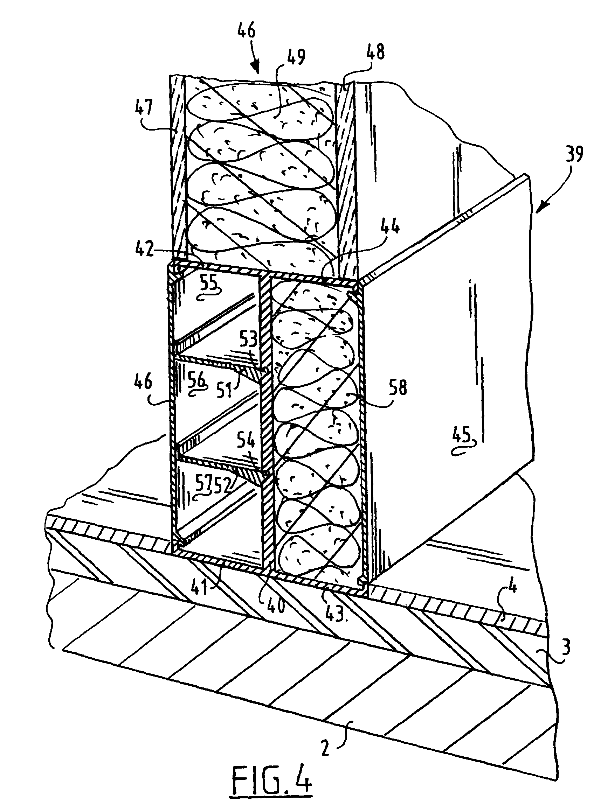

Figure 4 shows a duct element 39 which is built up of a steel or plastic I-profile which is closable on both sides with closing plates 45 and 46. The I-profile consists of a standing profile part 40, a lying left and right-hand profile part 41 and 43 and a left and right-hand lying profile part 42 and 44. In standing part 40 are arranged elongate grooves in which lips 53 and 54 of compartment plates 51 and 52 can engage in a manner as stated above. Three compartments can hereby be created on the left-hand side of standing part 40, an upper compartment 55, a middle compartment 56 and lower compartment 57. The three compartments can be filled with lines. It is also possible to use compartment 56 as shunting area for the lines in compartments 55 and 57. Sound-absorbing material such as glass-wool or rock-wool is arranged on the right-hand side of standing part 40 to provide sufficient sound insulation.

In this embodiment a non-bearing inner wall 46 is placed on the left and right-hand profile parts 42 and 44. This inner wall preferably takes a light form so as to provide the user with a free choice of lay-out of the space in the dwelling. The non-bearing inner wall consists in this case of a left-hand plasterboard 47 and a right-hand plasterboard 48 with sound-absorbing material 49 therebetween. Other random types of inner wall can however also be placed on top of the I-profile, such as metal stud walls, solid walls of plaster-concrete mix, plaster etc.

For a free choice of lay-out of the living area the inner walls must be simple to arrange, remove or displace. With the duct elements according to the invention, and in particular in accordance with the embodiment of figures 4, 5 and 6 which can be placed directly onto finishing floor 3 of the basic floor 2, in combination with an inner wall 46, a flexible and readily displaceable inner wall system is provided, wherein connecting elements can be provided subject to the desired lay-out of the space.

In an embodiment (not shown) openings are arranged in the upper lying profile part 42 through which lines can be guided out of upper compartment 55. In the case of an inner wall 46 in the form of a cavity construction, these lines can be carried through the cavity to a wall socket arranged in plasterboard 47 or 48. This provides the option of mounting socket outlets at a random position on the inner wall without channelling and the like and subject to the changing taste of the occupant.

Instead of an I-profile as shown in figure 4, two C-profiles can be placed back-to-back relative to each other and optionally fixed to each other. This has the advantage that the duct elements arranged in a narrowed portion in the party wall or the inner cavity wall of an outside wall (figures 1-3,7) and the duct elements arranged under an inner wall (figures 4-6) are substantially the same and therefore mutually interchangeable without problem. A uniform cable duct system suitable for inner walls, party walls and outside walls is hereby provided.

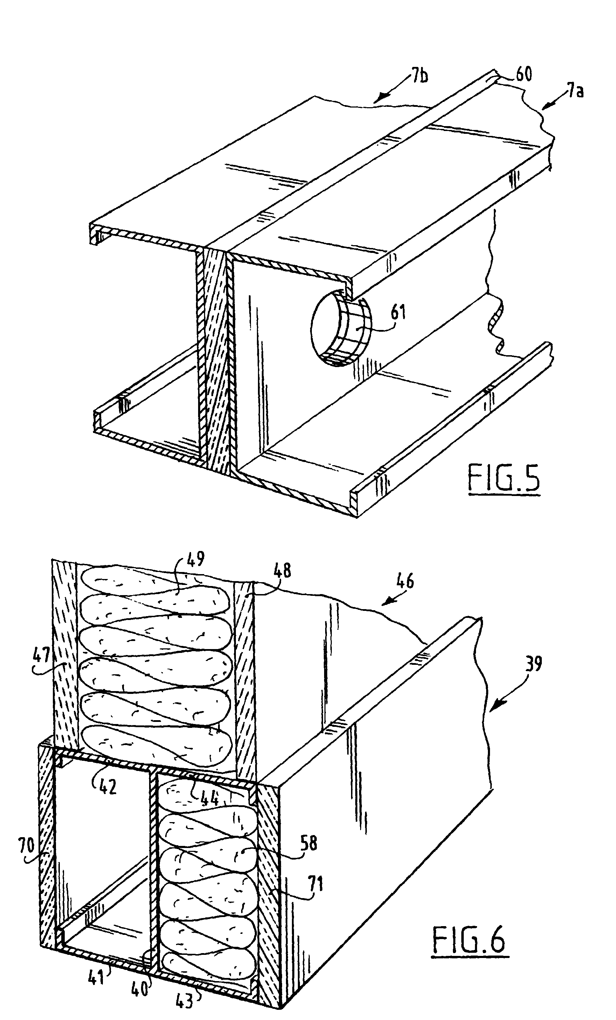

Figure 5 shows another embodiment, wherein between two C-profiles 7a and 7b facing away from each other a sound-insulating board 60, manufactured for instance from MDF, plaster and the like, is arranged to improve the sound insulation of the duct element. This figure also shows that an opening 61 can be arranged in the profiles, and in this case also in the sound-insulating board 60, so that lines running through duct profile 7b can be guided to duct profile 7a, and vice versa. This means that both sides of the I-profile can be provided with the desired lines. It is also possible when the lines are for instance situated in duct profile 7b to use the space in profile 7a for transformers, amplifiers and the like. Insulation material 58 such as glass-wool or rock-wool can also be arranged in one of the profile parts 7a, 7b in the case an opening 61 is arranged between profiles 7a and 7b.

Although a single (round) hole is shown in figure 5, it is recommended in a further embodiment (not shown) to arrange (rectangular) holes with dimensions of for instance 4x6 cm at regular distances of 5-10 cm.

Figure 6 shows the situation wherein, in order to improve the sound insulation of the whole of inner wall 46 and duct element 39, the closing plates 45 and 46 of the above described embodiment are replaced by sound-insulating boards 71 and 70, for instance MDF boards, plasterboard and the like. An additional advantage is that the sound insulation does not diminish, or hardly so, as a result of possible openings 61 in the standing part 40 of the I-profile.

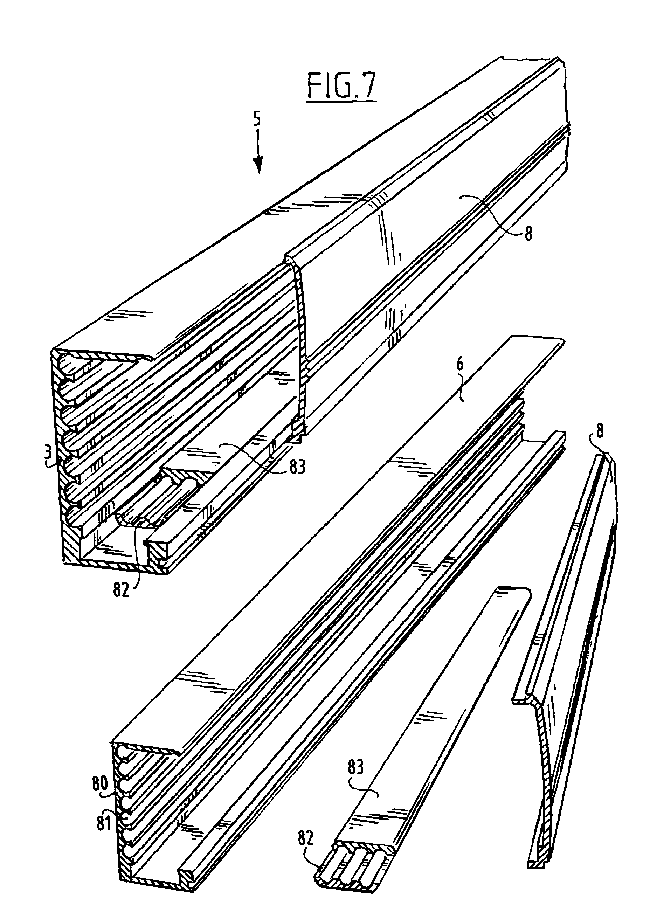

Figure 7 shows another preferred embodiment of the duct element 5 in which a plastic C-profile 6 can be closed using a closing plate 8, wherein standing part 80 of C-profile 6 is provided with a number of, in this case seven, groove-like recesses 81 in which can be arranged fastening elements (not shown) to which can be fastened possible lines to be arranged in the duct element. A shielding is moreover provided for low-voltage lines, communication lines, (for instance ISDN, telephone, CATV) relative to the mains supply lines (220 volts, 380 volts). This shielding consists of a lower part 82 and an upper part 83 which can be placed one on the other and which, in the situation placed one on the other, define a number of, in this case three, cylindrical openings in which the lines for shielding can be arranged. The lower part 82 and upper part 83 can be snapped fixedly into a recess 81 of C-profile 6.

In the house-building industry non-bearing inner walls are usually erected from plaster-concrete mix blocks, so that the walls are easy to the touch, can be erected quickly and have sufficient sound insulation. It is of course also conceivable to erect such walls using a framework, for instance with the so-called metal stud system.

The above described embodiments of duct elements can also be embodied as plug-in components, i.e. the duct elements are embodied with lines and/or connecting elements prearranged in the compartments. Such pre-cabled duct elements have a length of for instance 700 mm and can be mutually coupled, wherein the lines are mutually connected for instance using plug connections.

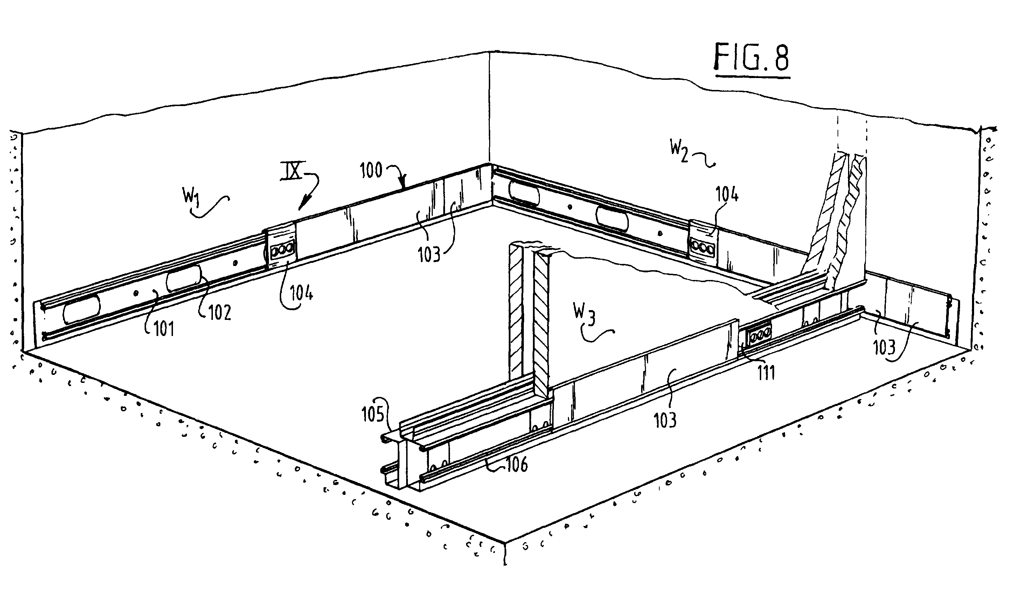

Close to floor F (fig. 8) a cable duct 100 is arranged along fixed walls W1, W2 and along partition wall W3. The cable duct comprises a rear plate 101 with prearranged openings 102, for instance at a mutual distance of about 50 cm, a cover plate 103 which can be arranged snappingly over profiled edges of rear plate 101 and a cover frame 104. Situated behind cover frame 104 in a prearranged opening 102 is a socket outlet which has a greater depth than the depth of the cable duct and which is arranged in a hole hacked into wall W1, preferably before rear plate 101 is arranged against wall W1. It is also conceivable however to arrange a socket outlet in hole 102 after arranging of rear plate 101, for instance when the lay-out of the space is changed.

Two cable ducts 105 respectively 106 of substantially C-shaped cross-section are further arranged under partition wall W3, over which ducts a cover plate 107 can be arranged which in appearance resembles cover plate 103 in fixed walls W1 and W2, for instance of brickwork (and/or plaster).

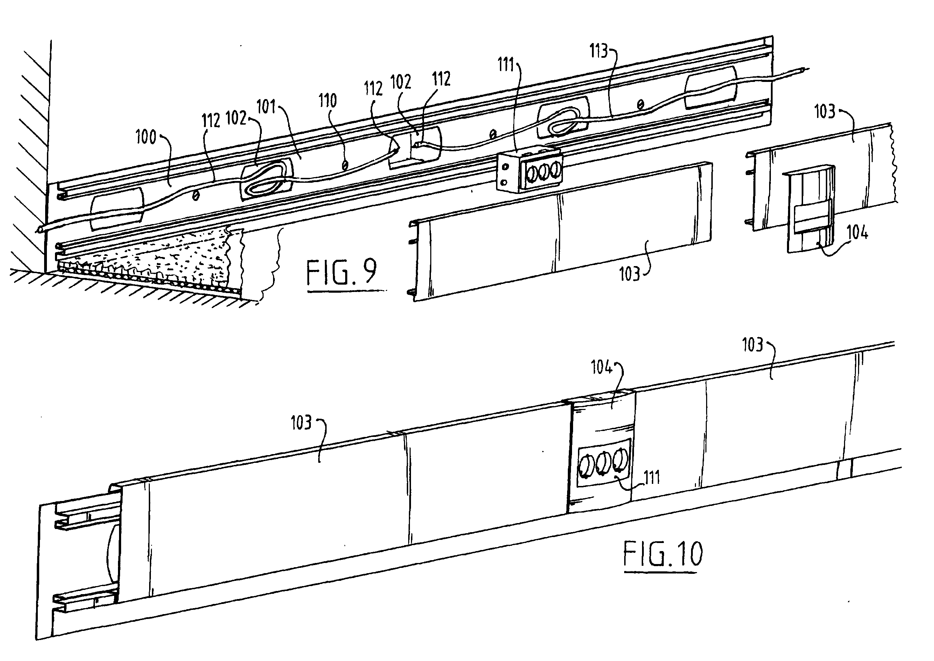

As also shown in figures 9 and 10, rear plate 101 is first fixed to wall W1, for instance with screws 110, wires are drawn through in front of or behind rear plate 101 to a socket outlet 111 at positions where a recess 102 is arranged in wall W1 at the position of opening 102 where electrical wires 112, 113 can be connected. Cover plates 103 are then sawn to the correct length and snapped onto the upper and lower edge of the rear plate. For further embellishment a cover frame 104 is subsequently placed over the sawn edges of cover plates 103 and socket outlet 111. For durability and for aesthetic reasons rear plate 101 and cover plates 103 are preferably manufactured from metal, while cover frame 104 can optionally be of plastic.

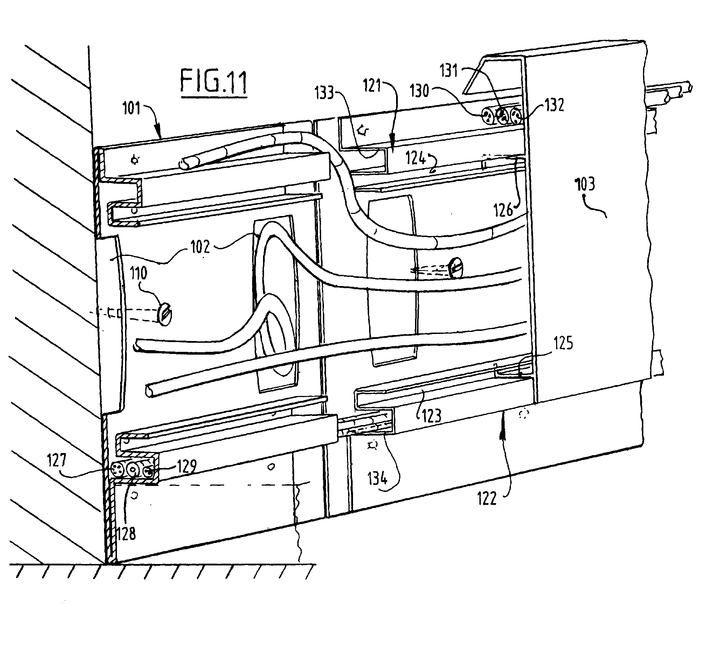

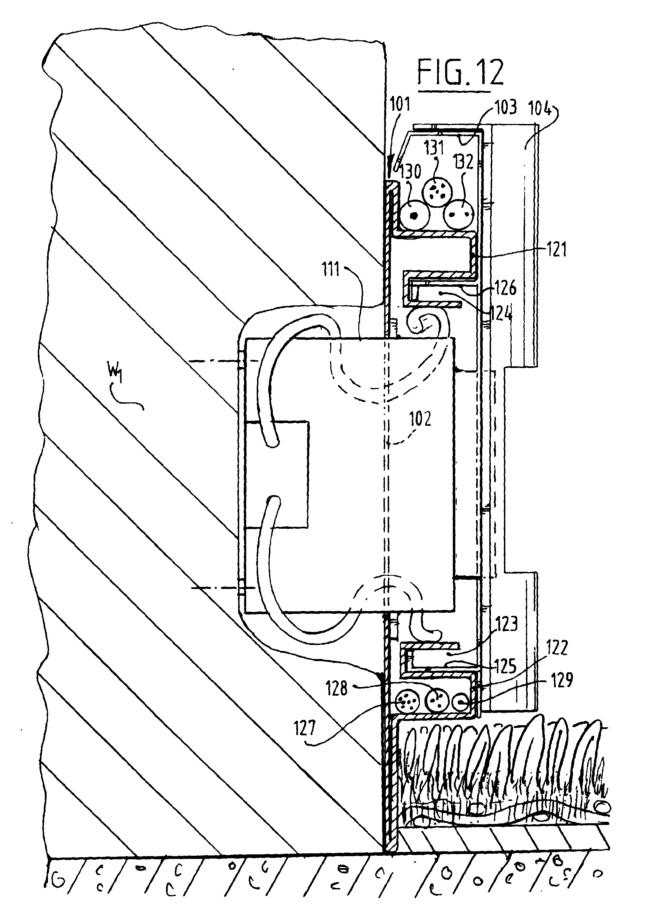

As shown particularly in fig. 11 and 12, the preferred embodiment of rear plate 101 is provided on both top and bottom with profiled walls 122 which are embodied such that a channel 123 respectively 124 is present therein for allowing protrusions 125 respectively 126 on cover plate 103 to hook therein, while compartments shielded by metal are moreover formed for cables 127, 128, 129, 130, 131, 132 for sensitive data transmission. In addition, the profiled edges 121, 122 are preferably situated at some distance from the outer end thereof in order to enable shunting of a wire 133 from the middle part to an outer channel.

The rear plate 101 and cover plate 103 are mutually formed such that space is available for wires in the middle region both in front of and behind the rear plate.

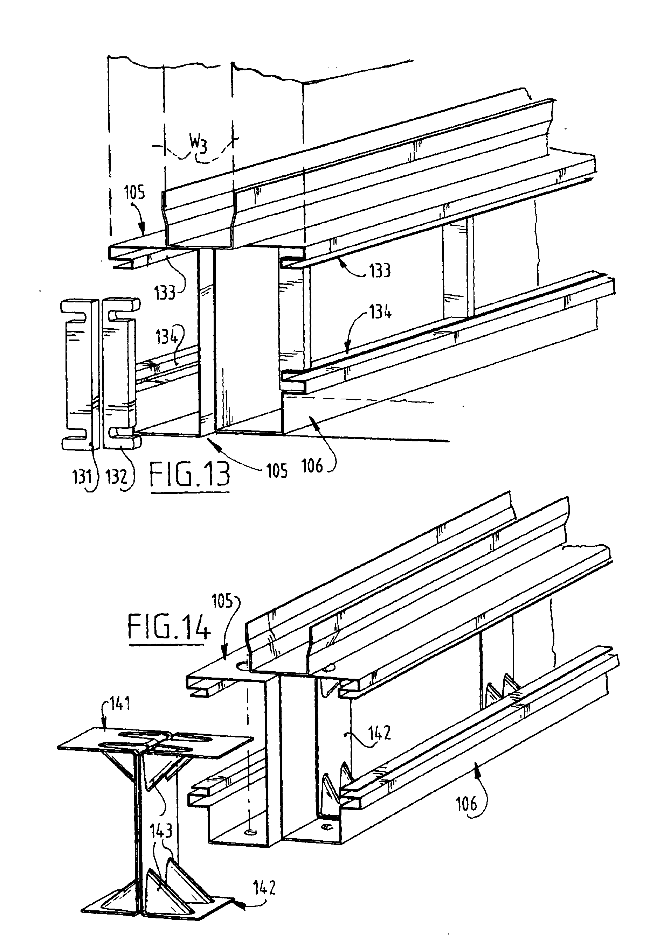

Fig. 13 and 14 further show the cable ducts 105 and 106 which are of substantially C-shaped cross-section and which are provided with profiled edges similar to the profiled edges of rear plate 103. Particularly in the case that comparatively heavy walls, for instance a high wall of plaster blocks, must be placed on these ducts, strengthening elements can be arranged therein, for instance elements 131 and 132 which engage between profiled edges 133 and 134 of cable ducts 105 and 106, or more heavily embodied supporting elements 141, 142 which can be placed along the side wall and below the upper wall of cable ducts 105 and 106 and which are further strengthened in the corners with shoring parts 143.

It will be apparent that the metal rear plate and cover plate must be earthed, which is realized simply in a manner not shown.

In the shown embodiment a socket outlet has a depth of 45-50 cm, about 30 mm of which is placed in a recess in the wall. The assembled cable duct including cover frame will then protrude only 30 mm relative to the wall.

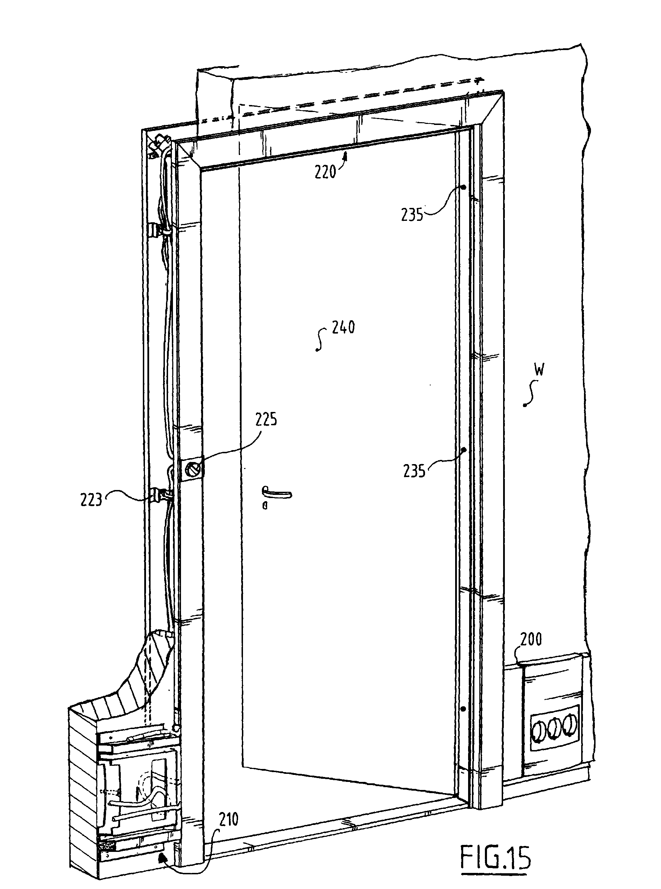

A door frame 220 is arranged on a wall W (fig. 15) in which a recess is arranged for a door frame and in which cable ducts 200 and 210 are arranged, in the reveal of which door frame a door 240 can rotate. Frame 220 consists of two halves 221 and 222. The half 221 is clamped to the wall using clamping bracket 223. Between the wall and the clamping brackets are guided electrical cables 224, for instance for connection of a light switch with dimmer 225 or for through-feed of an electrical cable from cable duct 200 to cable duct 210. In the upper corners of frame half 221 are arranged earth clamps 226 for efficient clamping of the components of sheet steel in order to ensure that there is sufficient electrical conduction therebetween. In addition, the frame is preferably finished such that it has no burrs and the like, so that the risk of damage to the insulation of electrical cables is as small as possible.

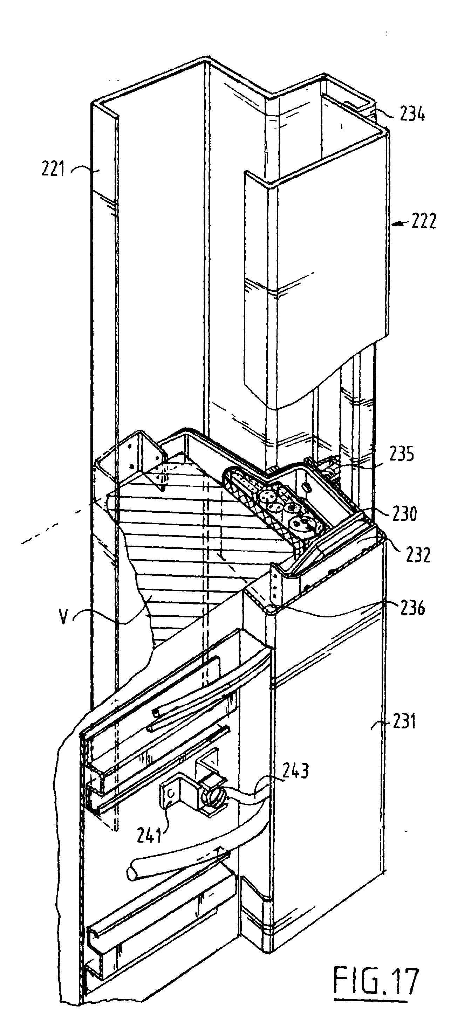

As will become apparent with particular reference to fig. 3, a number of cables can be arranged in a protective sleeve 230. Fig. 17 also shows that between clamping bracket 223 and bent plate part 231 engaging on wall W there is a further space 232 available in which for instance sensitive data transmission cables can be received which are preferably situated at a distance from the other cables.

After frame half 221, clamping brackets 223 and the cables are arranged on the wall, frame part 22 can be fitted by sliding this half along clamping bracket 223 and along a bent edge 234 of frame half 221 and fixing it to clamping bracket 223 using socket screws 235.

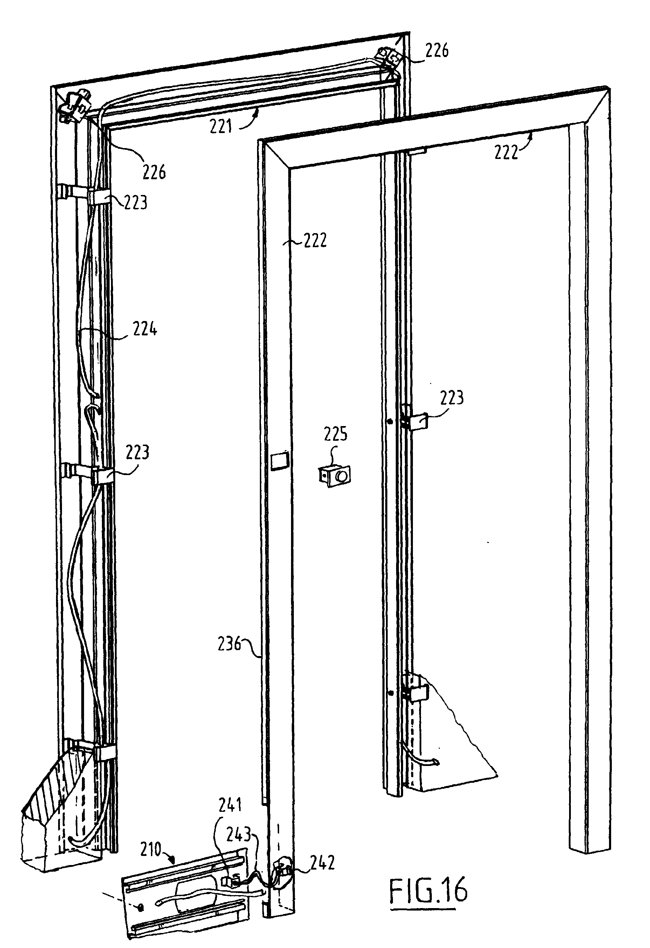

As shown particularly in fig. 16, a recess is provided in the bent edge 236 of frame half 222 at the position of cable duct 210 (and 200) for a neat connection thereto.

In addition to the earth terminals 226, both frame halves 221 and 222 are - collectively or in any case individually - earthed. Frame half 22 is connected conductively to the cable duct via further earth terminals 241 and 242 and a wire arranged therebetween, this cable duct in turn being earthed.

The present invention is not limited to the above described preferred embodiments thereof; the rights sought are defined by the following claims, within the scope of which many modifications can be envisaged. One non-limiting modification relates for instance to a narrower embodiment of the releasable frame part, in which a narrower light switch (without dimmer) can then be accommodated. In addition, aspects from the distinct preferred embodiments can thus be combined with each other without therein departing from the scope of the invention.

## Claims

1. Building, comprising:
- a floor;
- a wall connecting onto the floor;
- one or more duct elements which can be fixed to each other, are placeable along the wall and the floor and in which lines can be received; wherein at least a part of each wall is narrowed.

2. Building as claimed in claim 1, wherein the available depth and visible depth of the duct element amount respectively to about 35-45 mm and 0-30 mm.

3. Building as claimed in claim 1 or 2, wherein the floor comprises a basic floor and a finishing floor arranged thereon and wherein the duct element extends through the finishing floor and supports on the basic floor.

4. Duct element, comprising:
- a duct housing divided into a first and second duct compartment for guiding lines of respectively a first and second type; and
- a closing element with which the duct housing can be closed.

5. Duct element as claimed in claim 4, wherein the lines of the first type comprise ECS lines for mains power supply, communication and/or security.

6. Duct element as claimed in claim 4 or 5, comprising a substantially C-shaped duct profile.

7. Duct element as claimed in any of the claims 4-6, wherein the duct element is adapted to be also arranged as structural support under a non-bearing wall.

8. Duct element as claimed in any of the claims 4-7, wherein the closing element is replaceable after fitting of the duct element.

9. Duct element as claimed in any of the claims 4-8, wherein the closing element and/or the duct housing are manufactured from plastic, wood or aluminium.

10. Duct element as claimed in any of the claims 4-9, evidently suitable for house-building.

11. Building as claimed in any of the claims 1-3, provided with a duct element as claimed in any of the claims 4-10.

12. Building as claimed in claim 11, wherein a non-bearing wall is erected from plaster-concrete mix blocks.

13. Method for arranging a duct element as claimed in at least one of the claims 4-10.

14. Assembly for a cable duct for arranging along a wall of a building, comprising:
- a rear plate for arranging thereof against the wall, which rear plate is provided with one or more prearranged openings for arranging socket outlets partly in the wall in the recessed position of the cable duct;
- a cover plate provided with complementary snap edges for snapping thereof over the snap edges of the rear plate; and
- a cover frame for arranging over an arranged socket outlet.

15. Assembly as claimed in claim 14, wherein the rear plate is of metal.

16. Assembly as claimed in claim 14 or 15, wherein the cover plate is of metal.

17. Assembly as claimed in claim 14, 15 or 16, wherein the rear plate and/or the cover plate are profiled such that in addition to the middle compartment one or more duct compartments are formed parallel thereto for shielded guiding of cables.

18. Assembly as claimed in claim 14, provided with a cable duct of substantially C-shaped cross-section with a cover plate which in appearance resembles the cover plate as claimed in claim 1.

19. Assembly as claimed in claim 18, provided with support elements for supporting the legs and/or flanges of the duct of C-shaped cross-section.

20. Method for arranging a cable duct along a wall, wherein a recess is arranged at a predetermined location in the wall, wherein a rear plate with an opening is arranged against the wall at the position of the recess, wherein a socket outlet is placed and connected in the recess and the opening, wherein a cover plate to length is snapped on and wherein a cover frame is arranged over the socket outlet and cover plate.

21. Method as claimed in claim 20, wherein an assembly as claimed in any of the claims 14-19 is applied.

22. Frame, comprising:
- a first frame part which can be fixed to an opening in a wall using clamping brackets;
- and a second frame part removable relative to the first frame part, wherein space is available between the first and the second frame part for guiding electrical cables through the frame.

23. Frame as claimed in claim 22, wherein the second part is provided with a recess for receiving a light switch.

24. Frame as claimed in either of the claims 22 or 23, provided with earthing means for earthing the frame.

25. Frame as claimed in any of the claims 22, 23 or 24, provided with earth terminals for mutual conductive connection of components thereof.

26. Frame as claimed in any of the claims 23, 24 or 25, provided with an additional channel part for guiding electrical cables at a distance from data transmission cables.

27. Building provided with a frame as claimed in one or more of the claims 22-26 and/or assembly as claimed in one or more of the claims 14-19.

28. Building as claimed in claims 1, 2, 3, 11, 12 and/or 27.

29. Method of erecting a building as claimed in claims 1, 2, 3, 11, 12 or 27.

30. Method as claimed in claims 13, 20 and/or 29.
